(19) Europäisches Patentamt
European Patent Office
Office européen des brevets

(11) **EP 4 556 815 A1**

(12) **EUROPEAN PATENT APPLICATION**

(43) Date of publication:
**21.05.2025   Bulletin 2025/21**

(21) Application number: **24195514.5**

(22) Date of filing: **21.08.2024**

(51) International Patent Classification (IPC):
**F25B 9/00** (2006.01)       **F25B 41/40** (2021.01)

(52) Cooperative Patent Classification (CPC):
**F25B 41/40; F25B 9/00;** F25B 2500/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023   JP 2023166077**

(71) Applicant: **Sumitomo Heavy Industries, Ltd.
Tokyo 141-6025 (JP)**

(72) Inventor: **MIZUNO, Yoji
Tokyo  188-8585 (JP)**

(74) Representative: **Louis Pöhlau Lohrentz
Patentanwälte
Postfach 30 55
90014 Nürnberg (DE)**

(54)   **CRYOCOOLER AND FLEXIBLE HOSE FOR CRYOCOOLER**

(57)   The task is to reduce noise generated from a flexible hose (63, 64, 70) during an operation of a cryocooler (10). A cryocooler (10) includes a compressor (12), a cold head (14), and a first flexible hose (63) that connects the compressor (12) to the cold head (14). The first flexible hose (63) includes a conduit (72) through which a working gas of the cryocooler (10) flows and a braid (74) externally mounted on the conduit (72). The braid (74) includes a braided wire (76) woven into a tubular shape to cover the conduit (72), and is configured such that a tensile stress that acts on the braided wire (76) when the working gas flows through the conduit (72) at a nominal pressure is 85 N/mm$^2$ or less.

FIG. 1

10

EP 4 556 815 A1

**Description**

BACKGROUND OF THE INVENTION

Field of the Invention

The present invention relates to a cryocooler and a flexible hose for a cryocooler.

Description of Related Art

In general, a cryocooler such as a Gifford-McMahon (GM) cryocooler includes a working gas pipe that connects a compressor and an expander, which is also called a cold head, for supplying and discharging a working gas between the compressor and the expander. A bellows-shaped flexible hose may be used as the working gas pipe. In the related art, it has been proposed to mount a flexible pipe on an inner surface of a bellows-shaped flexible hose in order to reduce noise generated from the flexible hose due to a flow of a working gas during an operation of a cryocooler (for example, see Japanese Unexamined Patent Publication No. 2002-333224).

SUMMARY OF THE INVENTION

The present inventor has studied the above-described flexible hose for a cryocooler and has recognized the following problem. The flexible hose aims to reduce the noise caused by the gas flow by smoothing the inner surface of the hose using a flexible pipe. However, according to the study of the present inventor, it has been found that a noise level may deteriorate depending on a design of a braid that is externally mounted on the flexible hose or a use condition of the cryocooler, such as a working gas pressure. In addition, the above-described flexible hose requires an additional part called a flexible pipe. This can lead to an increase in a manufacturing cost of the flexible hose. There is also a concern about long-term reliability, such as the progress of abrasion of the pipe due to a long-term operation of the cryocooler.
An exemplary object of one aspect of the present invention is to reduce noise generated from a flexible hose during an operation of a cryocooler.
According to one aspect of the present invention, there is provided a cryocooler including a compressor, a cold head, and a flexible hose that connects the compressor to the cold head and that includes a conduit through which a working gas of the cryocooler flows and a braid externally mounted on the conduit. The braid includes a braided wire woven into a tubular shape to cover the conduit, and is configured such that a tensile stress that acts on the braided wire when the working gas flows through the conduit at a nominal pressure is 85 N/mm$^2$ or less.
According to another aspect of the present invention, there is provided a cryocooler including a compressor, a cold head, and a flexible hose that connects the compressor to the cold head and that includes a conduit through which a working gas of the cryocooler flows. The conduit includes a corrugated inner surface that is exposed to the flow of the working gas, and an inter-corrugation gap on the corrugated inner surface is 1 mm or less.
According to still another aspect of the present invention, there is provided a flexible hose for a cryocooler, the flexible hose including a conduit through which a working gas of the cryocooler flows, and a braid externally mounted on the conduit. The braid includes a braided wire woven into a tubular shape to cover the conduit, and is configured such that a tensile stress that acts on the braided wire when the working gas flows through the conduit at a nominal pressure is 85 N/mm$^2$ or less. Additionally or alternatively, the conduit includes a corrugated inner surface that is exposed to the flow of the working gas, and an inter-corrugation gap on the corrugated inner surface is 1 mm or less.
According to the present invention, it is possible to reduce noise generated from the flexible hose during the operation of the cryocooler.

BRIEF DESCRIPTION OF THE DRAWINGS

Fig. 1 is a diagram schematically showing a cryocooler according to an embodiment.
Fig. 2 is a diagram schematically showing the cryocooler according to the embodiment.
Figs. 3A to 3C are diagrams schematically showing a flexible hose for a cryocooler according to the embodiment.
Fig. 4 is a graph showing a relationship between a braid stress and a noise level according to the embodiment.
Fig. 5 is a graph showing a relationship between an inter-corrugation gap and a noise level according to the embodiment.

## DETAILED DESCRIPTION OF THE INVENTION

Hereinafter, an embodiment for carrying out the present invention will be described in detail with reference to the drawings. In the description and the drawings, the same or equivalent components, members, and processes are denoted by the same reference numerals, and overlapping description is omitted as appropriate. The scale and the shape of each of parts illustrated in the drawings are set for convenience to make the description easy to understand, and are not to be interpreted as limiting unless stated otherwise. The embodiment is merely an example and does not limit the scope of the present invention. All features described in the embodiment or combinations thereof are not necessarily essential to the present invention.

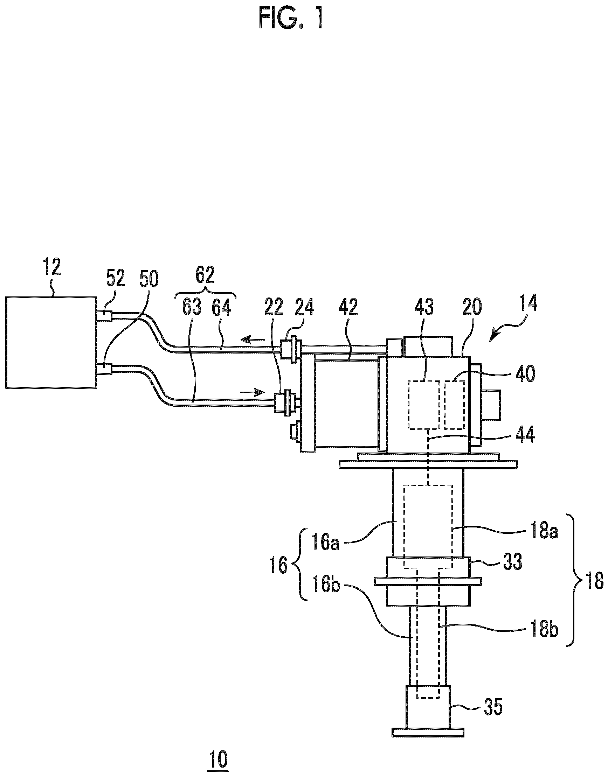

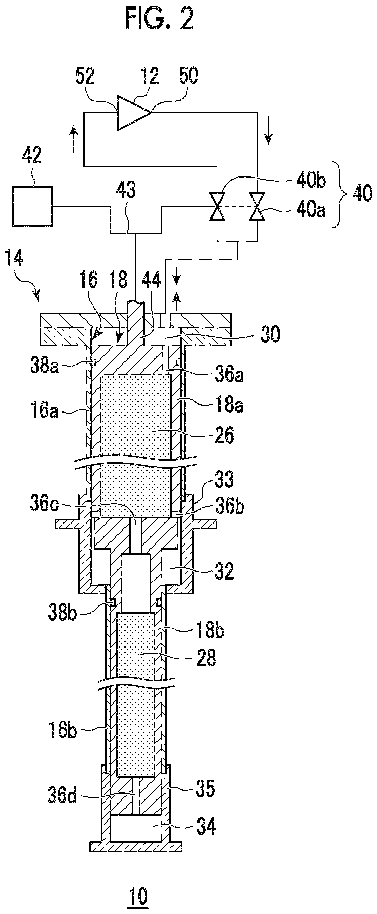

Figs. 1 and 2 are diagrams schematically showing a cryocooler 10 according to the embodiment. As an example, the cryocooler 10 is a two-stage Gifford-McMahon (GM) cryocooler. Fig. 1 shows an appearance of the cryocooler 10, and Fig. 2 shows an internal structure of the cryocooler 10.

The cryocooler 10 includes a compressor 12 and a cold head 14. The compressor 12 is configured to collect a working gas of the cryocooler 10 from the cold head 14, pressurize the collected working gas, and supply the working gas to the cold head 14 again. The cold head 14 is also called an expander. The compressor 12 and the cold head 14 constitute a refrigeration cycle (for example, a GM cycle) of the cryocooler 10, whereby the cryocooler 10 can provide cryogenic cooling. The working gas is also referred to as a refrigerant gas, and other suitable gases may be used although a helium gas is typically used.

In general, both a pressure of the working gas supplied from the compressor 12 to the cold head 14 and a pressure of the working gas collected from the cold head 14 to the compressor 12 are considerably higher than the atmospheric pressure, and can be called a first high pressure and a second high pressure, respectively. The first high pressure, that is, a nominal pressure of the working gas on a supply side may be selected from, for example, a first pressure range of 1.5 MPa or higher and 3.5 MPa or lower. This first nominal pressure may be, for example, 2.2 MPa. The second high pressure, that is, a nominal pressure of the working gas on a recovery side is lower than the first high pressure. The second high pressure is selected from, for example, a second pressure range of 0.2 MPa or higher and 2.0 MPa or lower. This second nominal pressure may be, for example, 0.8 MPa. Hereinafter, for convenience of description, the first high pressure and the second high pressure are also simply called a high pressure and a low pressure, respectively. For the sake of understanding, a flow direction of the working gas is indicated by an arrow.

As shown in Fig. 1, the compressor 12 includes a delivery port 50 for delivering the working gas and a collection port 52 for collecting the working gas. The delivery port 50 is provided in a casing of the compressor 12 as an outlet from the compressor 12 for the high-pressure working gas compressed by the compressor 12. The collection port 52 is provided in the casing of the compressor 12 as an inlet to the compressor 12 for the low-pressure working gas to be collected in the compressor 12.

The compressor 12 may be, for example, a scroll type, a rotary type, or another suitable pump for pressurizing the working gas. In this embodiment, the compressor 12 is configured to discharge the working gas at a fixed and constant flow rate. Alternatively, the compressor 12 may be configured to vary the flow rate of the working gas to be discharged. For example, a cooling device such as a chiller may be attached to the compressor 12 in order to remove compression heat generated by compressing the working gas.

The cold head 14 includes a cryocooler cylinder 16 and a displacer assembly 18. The cryocooler cylinder 16 guides linear reciprocation of the displacer assembly 18, and forms an expansion chamber (32, 34) for the working gas in a space with the displacer assembly 18. In addition, the cold head 14 includes a pressure switching valve 40 that determines an intake start timing of the working gas into the expansion chamber and an exhaust start timing of the working gas from the expansion chamber.

In the present specification, in order to describe a positional relationship between the components of the cryocooler 10, for convenience, a side close to a top dead center of the axial reciprocation of the displacer is described as "upper", and a side close to a bottom dead center is described as "lower". The top dead center is a position of the displacer where a volume of an expansion space is maximized, and the bottom dead center is the position of the displacer where the volume of the expansion space is minimized. Since a temperature gradient is generated in which a temperature drops from an upper side to a lower side in an axial direction during the operation of the cryocooler 10, the upper side can be referred to as a high temperature side and the lower side can be referred to as a low temperature side.

The cryocooler cylinder 16 includes a first cylinder 16a and a second cylinder 16b. As an example, the first cylinder 16a and the second cylinder 16b are members having a cylindrical shape, and the second cylinder 16b has a smaller diameter than the first cylinder 16a. The first cylinder 16a and the second cylinder 16b are coaxially disposed, and a lower end of the first cylinder 16a is rigidly connected to an upper end of the second cylinder 16b.

The displacer assembly 18 includes a first displacer 18a and a second displacer 18b, which are connected to each other, and these move integrally. As an example, the first displacer 18a and the second displacer 18b are members having a cylindrical shape, and the second displacer 18b has a smaller diameter than the first displacer 18a. The first displacer 18a and the second displacer 18b are coaxially disposed.

The first displacer 18a is accommodated in the first cylinder 16a, and the second displacer 18b is accommodated in the second cylinder 16b. The first displacer 18a can reciprocate in the axial direction along the first cylinder 16a, and the second displacer 18b can reciprocate in the axial direction along the second cylinder 16b.

As shown in Fig. 2, the first displacer 18a accommodates a first regenerator 26. The first regenerator 26 is formed by filling a tubular main body of the first displacer 18a with a wire mesh such as copper or other appropriate first regenerator material. An upper lid portion and a lower lid portion of the first displacer 18a may be provided as separate members from the main body of the first displacer 18a, and the upper lid portion and the lower lid portion of the first displacer 18a may be fixed to the main body by appropriate means such as fastening or welding, whereby the first regenerator material may be accommodated in the first displacer 18a.

Similarly, the second displacer 18b accommodates a second regenerator 28. The second regenerator 28 is formed by filling a tubular main body of the second displacer 18b with a non-magnetic regenerator material such as bismuth, a magnetic regenerator material such as $HoCu_2$, or other appropriate second regenerator material. The second regenerator material may be formed in a granular shape. The upper lid portion and the lower lid portion of the second displacer 18b may be provided as separate members from the main body of the second displacer 18b, and the lower lid portion and the upper lid portion of the second displacer 18b may be fixed to the main body by appropriate means such as fastening or welding, whereby the second regenerator material may be accommodated in the second displacer 18b.

The displacer assembly 18 forms an upper chamber 30, a first expansion chamber 32, and a second expansion chamber 34 inside the cryocooler cylinder 16. The cold head 14 includes a first cooling stage 33 and a second cooling stage 35 for heat exchange with a desired object or medium to be cooled by the cryocooler 10. The upper chamber 30 is formed between the upper lid portion of the first displacer 18a and the upper portion of the first cylinder 16a. The first expansion chamber 32 is formed between the lower lid portion of the first displacer 18a and the first cooling stage 33. The second expansion chamber 34 is formed between the lower lid portion of the second displacer 18b and the second cooling stage 35. The first cooling stage 33 is fixed to the lower portion of the first cylinder 16a to surround the first expansion chamber 32, and the second cooling stage 35 is fixed to the lower portion of the second cylinder 16b to surround the second expansion chamber 34.

The first regenerator 26 is connected to the upper chamber 30 through a working gas flow path 36a formed in the upper lid portion of the first displacer 18a, and is connected to the first expansion chamber 32 through a working gas flow path 36b formed in the lower lid portion of the first displacer 18a. The second regenerator 28 is connected to the first regenerator 26 through a working gas flow path 36c formed from the lower lid portion of the first displacer 18a to the upper lid portion of the second displacer 18b. In addition, the second regenerator 28 is connected to the second expansion chamber 34 through a working gas flow path 36d formed in the lower lid portion of the second displacer 18b.

A first seal 38a and a second seal 38b may be provided so that the working gas flow between the first expansion chamber 32, the second expansion chamber 34 and the upper chamber 30 is guided to the first regenerator 26 and the second regenerator 28 rather than to the clearance between the cryocooler cylinder 16 and the displacer assembly 18. The first seal 38a may be mounted to the upper lid portion of the first displacer 18a to be disposed between the first displacer 18a and the first cylinder 16a. The second seal 38b may be mounted to the upper lid portion of the second displacer 18b to be disposed between the second displacer 18b and the second cylinder 16b.

As shown in Fig. 1, the cold head 14 includes a cryocooler housing 20 that accommodates the pressure switching valve 40. The cryocooler housing 20 is coupled to the cryocooler cylinder 16, thereby forming a hermetic container that accommodates the pressure switching valve 40 and the displacer assembly 18.

In addition, the cold head 14 includes an intake port 22 for receiving the working gas and an exhaust port 24 for exhausting the working gas. The intake port 22 is provided in the cryocooler housing 20 as an inlet to the cold head 14 for the high-pressure working gas supplied from the compressor 12. The exhaust port 24 is provided in the cryocooler housing 20 as an outlet from the cold head 14 for the low-pressure working gas to be discharged from the cold head 14.

As shown in Fig. 2, the pressure switching valve 40 includes a high pressure valve 40a and a low pressure valve 40b, and is configured to generate periodic pressure fluctuations in the cryocooler cylinder 16. The delivery port 50 of the compressor 12 is connected to the upper chamber 30 via the high pressure valve 40a, and the collection port 52 of the compressor 12 is connected to the upper chamber 30 via the low pressure valve 40b. The high pressure valve 40a and the low pressure valve 40b are configured to be selectively and alternately opened and closed (that is, when one is open, the other is closed).

The pressure switching valve 40 may be a rotary valve type. That is, the pressure switching valve 40 may be configured such that the high pressure valve 40a and the low pressure valve 40b are alternately opened and closed by rotational sliding of a valve disc with respect to a stationary valve main body. In that case, an expander motor 42 may be connected to the pressure switching valve 40 to rotate the valve disc of the pressure switching valve 40. For example, the pressure switching valve 40 is disposed such that a valve rotation axis is coaxial with a rotation axis of the expander motor 42.

Alternatively, the high pressure valve 40a and the low pressure valve 40b may be valves that can be individually controlled. In this case, the pressure switching valve 40 does not need to be connected to the expander motor 42.

The expander motor 42 may be an electric motor, for example, a permanent magnet type motor driven by three-phase alternating current. The expander motor 42 is connected to a displacer drive shaft 44 via a motion conversion mechanism 43 such as a Scotch yoke mechanism. The expander motor 42 is attached to the cryocooler housing 20. The motion conversion mechanism 43 is accommodated in the cryocooler housing 20 as with the pressure switching valve 40. The motion conversion mechanism 43 converts the rotary motion output by the expander motor 42 into linear reciprocation of the displacer drive shaft 44. The displacer drive shaft 44 extends from the motion conversion mechanism 43 into the upper chamber 30, and is fixed to the upper lid portion of the first displacer 18a. The rotation of the expander motor 42 is converted into the axial reciprocation of the displacer drive shaft 44 by the motion conversion mechanism 43, and the displacer assembly 18 linearly reciprocates in the cryocooler cylinder 16 in the axial direction.

In addition, the cryocooler 10 includes a working gas line 62 that circulates the working gas between the compressor 12 and the cold head 14. The working gas line 62 includes a first flexible hose 63 on a high pressure side and a second flexible hose 64 on a low pressure side. The first flexible hose 63 connects the delivery port 50 of the compressor 12 to the intake port 22 of the cold head 14. Therefore, the high-pressure working gas supplied from the compressor 12 to the cold head 14 flows through the first flexible hose 63. The second flexible hose 64 connects the collection port 52 of the compressor 12 to the exhaust port 24 of the cold head 14. Therefore, the low-pressure working gas collected from the cold head 14 to the compressor 12 flows through the second flexible hose 64. Details of these flexible hoses will be described below.

When the compressor 12 and the expander motor 42 are operated, the cryocooler 10 generates periodic volume fluctuations and pressure fluctuations of the working gas synchronized with the periodic volume fluctuations in the first expansion chamber 32 and the second expansion chamber 34. Typically, in the intake process, as the low pressure valve 40b is closed and the high pressure valve 40a is opened, the high-pressure working gas flows from the compressor 12 into the upper chamber 30 through the high pressure valve 40a, is supplied to first expansion chamber 32 through the first regenerator 26, and is supplied to the second expansion chamber 34 through the second regenerator 28. In this manner, the first expansion chamber 32 and the second expansion chamber 34 are pressurized from the low pressure to the high pressure. In this case, the displacer assembly 18 is moved upward from the bottom dead center to the top dead center, and the volumes of the first expansion chamber 32 and the second expansion chamber 34 are increased. When the high pressure valve 40a is closed, the intake process ends.

In the exhaust process, as the high pressure valve 40a is closed and the low pressure valve 40b is opened, the high pressure first expansion chamber 32 and the second expansion chamber 34 are opened to a low-pressure working gas suction port of the compressor 12, and thus the working gas expands in the first expansion chamber 32 and the second expansion chamber 34. As a result, the low-pressure working gas is discharged from the first expansion chamber 32 and the second expansion chamber 34 to the upper chamber 30 through the first regenerator 26 and the second regenerator 28. In this case, the displacer assembly 18 is moved downward from the top dead center to the bottom dead center, and the volumes of the first expansion chamber 32 and the second expansion chamber 34 are reduced. The working gas is collected from the cold head 14 to the compressor 12 through the low pressure valve 40b. When the low pressure valve 40b is closed, the exhaust process ends.

In this way, a refrigeration cycle such as a GM cycle is configured in the cryocooler 10, and the first cooling stage 33 and the second cooling stage 35 are cooled to a desired cryogenic temperature. The first cooling stage 33 is cooled to a first cooling temperature, and the second cooling stage 35 is cooled to a second cooling temperature lower than the first cooling temperature. The first cooling temperature may be, for example, in a range of about 30 K to about 80 K. The second cooling temperature may be, for example, in a range of about 1 K to about 20 K. The second cooling temperature may be a liquid helium temperature of about 4.2 K or a temperature lower than the liquid helium temperature.

Incidentally, during the operation of the cryocooler 10, the working gas line 62 can generate noise caused by the flow of the working gas. In the intake process, the working gas flows from the compressor 12 to the cold head 14 through the first flexible hose 63, and thus a sound due to the flow of the working gas may be generated from the first flexible hose 63. In the exhaust process, the working gas flows from the cold head 14 to the compressor 12 through the second flexible hose 64, and thus a sound due to the flow of the working gas may be generated from the second flexible hose 64. Such a sound may be perceived as noise by a user of the cryocooler 10 or a user of an apparatus (for example, a magnetic resonance imaging (MRI) apparatus) on which the cryocooler 10 is mounted. Therefore, the present specification discloses a technique for reducing such noise.

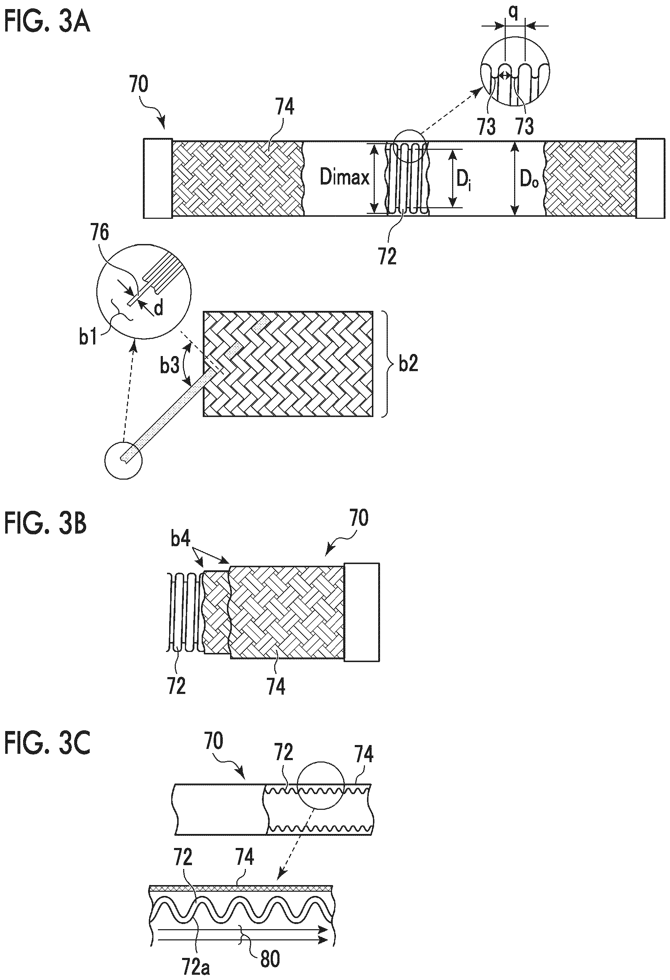

Figs. 3A to 3C are diagrams schematically showing a flexible hose for a cryocooler according to the embodiment. As shown in Figs. 3A to 3C, a flexible hose 70 includes a conduit 72 through which the working gas of the cryocooler flows and a braid 74 that is externally mounted on the conduit 72. The flexible hose 70 illustrated in the drawing can be used for the above-described first flexible hose 63, second flexible hose 64, or both of them with reference to Figs. 1 and 2.

In this embodiment, the conduit 72 is a corrugated tube, that is, a bellows-shaped tube. As schematically shown in Fig. 3C, an inner surface 72a of the conduit 72, that is, an inner surface of the corrugated tube (hereinafter, also referred to as a corrugated inner surface) is exposed to a flow 80 of the working gas. The conduit 72 is formed of, for example, stainless steel. Alternatively, the conduit 72 may be formed of another appropriate material.

The conduit 72 can be designed based on several conduit design parameters. The conduit design parameters may include, for example, a maximum inner diameter $D_{imax}$ (mm) of the corrugated tube, an inner diameter $D_i$ (mm) of the corrugated tube, a corrugation pitch q (mm), and a corrugated tube gap g (mm). A large number of protrusions 73 extending toward an inside of the tube are formed along a tube axial direction on a tube wall of the corrugated tube, and the corrugated tube gap g indicates a distance in the tube axial direction between two adjacent protrusions 73 as illustrated in the drawing.

The braid 74 includes a braided wire 76 woven into a tubular shape to cover the conduit 72.

The braid 74 is woven to envelop the corrugated shape of the conduit 72. Therefore, an outer surface of the braid 74 has a cylindrical shape with a substantially constant outer diameter $D_o$ (mm), unlike the conduit 72. The braided wire 76 is formed of, for example, stainless steel. Alternatively, the braided wire 76 may be formed of another appropriate material.

The braid 74 can be designed based on several braid design parameters. The braid design parameters may include, for example, a braided wire diameter d (mm), a braid holding number b1, a braid count b2, a braid crossing angle b3 (rad), and the number of braid layers b4. The braid holding number b1 represents the number of the braided wires 76 constituting a bundle of the braided wires 76 used for weaving the braid 74. The braid count b2 represents the number of bundles of the braided wires 76 used for weaving the braid 74. The braid crossing angle b3 represents an angle between the bundles of the braided wires 76 when the braid 74 is woven. The number of braid layers b4 represents the number of layers of the braid 74 that cover the conduit 72, and Fig. 3B illustrates a case where the number of braid layers b4 is two.

The present inventor has investigated noise from the flexible hose 70 having various braid designs by experiments, and as a result, has found one main parameter that governs a noise level in relation to the braid 74. The parameter is a tensile stress acting on the braided wire 76 (hereinafter, also simply referred to as a "braid stress").

When the working gas flows through the conduit 72 of the flexible hose 70, the conduit 72 is forced to extend by the pressure of the working gas, and this force is transmitted to the braid 74, which may cause a tensile stress in the braided wire 76. The braid stress $\sigma$ (N/mm²), that is, the tensile stress acting on one braided wire 76 in an extending direction thereof can be calculated by the following expression.

$$\sigma = P \cdot \pi(D_{imax}/2)^2/(b1 \cdot b2)/b4/\cos(b3/2)/\pi(d/2)^2$$

Here, P (MPa) represents an internal pressure of the conduit 72 due to the working gas during the operation of the cryocooler 10. In order to calculate the braid stress $\sigma$, the above-described first nominal pressure (for example, 2.2 MPa) can be used as the internal pressure P.

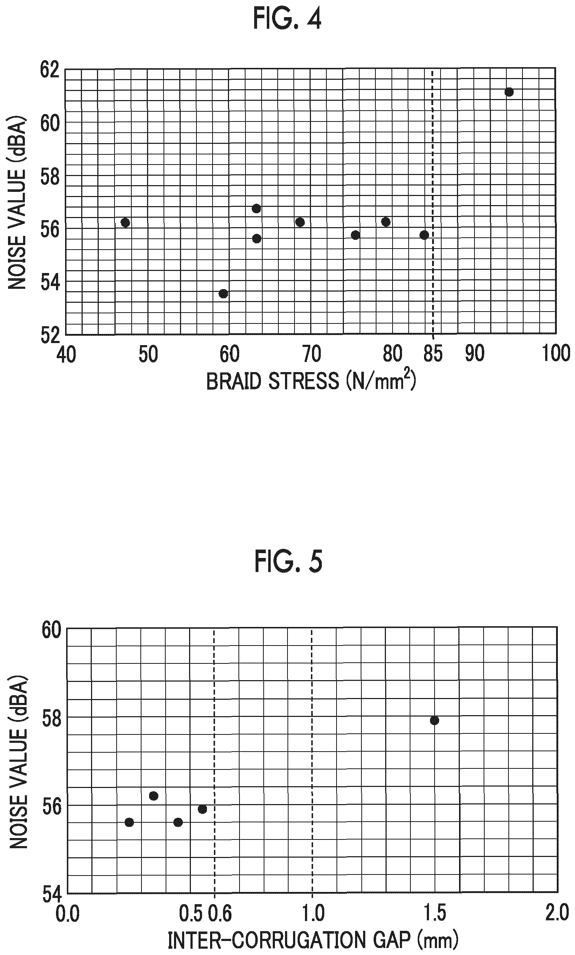

Fig. 4 is a graph showing a relationship between a braid stress and a noise level according to the embodiment.

The braid stress is calculated and the noise value (dBA) is measured for nine samples 1a to 1i of the first flexible hose 63 prepared by the present inventor and results thereof are plotted in Fig. 4.

The braid design parameters of the nine samples 1a to 1i are as described in the following table.

[Table 1]

| | Braid design parameter | | | | |
|---|---|---|---|---|---|
| | Braided wire diameter d (mm) | Braid holding number b1 | Braid count b2 | Braid crossing angle b3 (degrees) | The number of braid layers b4 |
| Sample 1a | 0.3 | 8 | 32 | 100 | 1 |
| Sample 1b | 0.3 | 8 | 32 | 80 | 1 |
| Sample 1c | 0.3 | 10 | 32 | 80 | 1 |
| Sample 1d | 0.3 | 10 | 32 | 100 | 1 |
| Sample 1e | 0.3 | 10 | 32 | 70 | 1 |
| Sample 1f | 0.3 | 10 | 32 | 80 | 1 |
| Sample 1g | 0.3 | 10 | 32 | 90 | 1 |
| Sample 1h | 0.3 | 9 | 32 | 100 | 1 |
| Sample 1i | 0.3 | 8 | 32 | 100 | 2 |

The calculated braid stress $\sigma$ (N/mm²) and the measured noise value (dBA) for the samples 1a to 1i are as follows, and these are shown in Fig. 4.

[Table 2]

|  | Braid stress (N/mm$^2$) | Noise value (dBA) |
|---|---|---|
| Sample 1a | 94.3 | 61.1 |
| Sample 1b | 79.2 | 56.2 |
| Sample 1c | 63.3 | 55.6 |
| Sample 1d | 75.5 | 55.7 |
| Sample 1e | 59.2 | 53.5 |
| Sample 1f | 63.3 | 56.7 |
| Sample 1g | 68.6 | 56.2 |
| Sample 1h | 83.9 | 55.7 |
| Sample 1i | 47.2 | 56.2 |

In calculating the braid stress $\sigma$, the design of the conduit 72 of each sample is the same, and the maximum inner diameter $D_{imax}$ of the corrugated tube is 25.2 mm. Operating conditions of the cryocooler 10 are the same for each sample, and the nominal pressure of the working gas in the first flexible hose 63 is 2.2 MPa. In addition, the cryocooler 10 is operated in a state where both the first flexible hose 63 and the second flexible hose 64 are housed in one soundproof box, and the noise value is measured inside the soundproof box. The same second flexible hose 64 is used for the noise measurement of each sample. With the soundproof box, external noise is not included in the measurement result. Since a timing at which the sound is generated is different between the first flexible hose 63 and the second flexible hose 64 as described above, the sound from the first flexible hose 63 can be measured separately from the sound from the second flexible hose 64. This noise measurement method is also applied to Fig. 5 described below.

As understood from Fig. 4, the noise value is generally kept at or below an upper limit value of about 56 dBA when the braid stress is 85 N/mm$^2$ or less. On the other hand, when the braid stress exceeds a threshold value (that is, 85 N/mm$^2$), the noise value exceeds the upper limit value and increases. Specifically, when the braid stress is 94.3 N/mm$^2$, the noise value reaches 61.1 dBA.

The sound emitted from the first flexible hose 63 is caused by an impact of the gas flow occurring in the conduit 72 when the high pressure valve 40a is opened at the start of the intake process of the cryocooler 10 and the high-pressure working gas flows from the compressor 12 into the first flexible hose 63. This impact is transmitted to the braided wire 76 of the braid 74 via the conduit 72, and is sensed as noise from the first flexible hose 63. The sound transmission through the braided wire 76 is promoted as the tension acting on the braided wire 76, that is, the braid stress is higher. The braided wire 76 acts somewhat like a guitar string. According to the analysis by the present inventor, it is considered that a sound pressure of the sound emitted from the braided wire 76 becomes significantly large when the braid stress exceeds a certain threshold value. From the measurement result shown in Fig. 4, this threshold value can be read as 85 N/mm$^2$.

Therefore, it is preferable that the braid 74 of the first flexible hose 63 is configured such that the tensile stress that acts on the braided wire 76 when the working gas flows through the conduit at the nominal pressure is 85 N/mm$^2$ or less. This proposal is based on an idea originally discovered by the present inventor that the noise can be managed by paying attention to the braid stress $\sigma$ calculated using the braid design parameters, rather than on the above-described braid design parameters (for example, d, b1, and b2) themselves. With such a braid design, it is possible to reduce the noise generated from the first flexible hose 63 during the operation of the cryocooler 10.

From the viewpoint of reducing the noise value, the lower braid stress is preferable. However, from the viewpoint of other factors such as manufacturability, it is considered reasonable in design that the braid stress is 30 N/mm$^2$ or more. Therefore, the braid 74 may be configured such that the tensile stress that acts on the braided wire 76 when the working gas flows through the conduit 72 at the nominal pressure is 30 N/mm$^2$ or more.

During the operation of the cryocooler 10, the internal pressure of the first flexible hose 63 is higher than the internal pressure of the second flexible hose 64. Therefore, the impact sound caused by the flow of the working gas is also likely to be more remarkable in the first flexible hose 63. Therefore, the braid stress management proposed in the present specification is effective as a noise countermeasure in a line on the high pressure side of the working gas line 62, such as the first flexible hose 63.

However, the above-described braid stress management, specifically, setting the braid stress to 85 N/mm$^2$ or less may be similarly applied to the second flexible hose 64. The second flexible hose 64 is expected to have a lower noise value because the nominal pressure of the working gas flowing therethrough during the operation of the cryocooler 10 is lower and the braid stress is smaller. Furthermore, a flexible hose of the same design as the first flexible hose 63 is adopted for the second flexible hose 64, whereby it is possible to reduce product costs through standardization of parts.

7

Fig. 5 is a graph showing a relationship between an inter-corrugation gap and a noise level according to the embodiment. An inter-corrugation gap of the conduit 72 is also one main parameter that governs the noise level. Five samples 2a to 2e of the second flexible hose 64 prepared by the present inventor have inter-corrugation gaps of different sizes as shown below. For the samples 2a to 2e, specifications other than the inter-corrugation gap are the same, such as the braid design. Specifically, the braid design of the samples 2a to 2e is the same as braid design of the sample 1c. The noise value (dBA) is measured for the samples 2a to 2e, and results thereof are plotted in Fig. 5. The noise measurement method is the same as the method used in Fig. 4 described above. The same first flexible hose 63 is used for the noise measurement of each sample.

[Table 3]

|  | Inter-corrugation gap (mm) | Noise value (dBA) |
| --- | --- | --- |
| Sample 2a | 1.5 | 57.9 |
| Sample 2b | 0.25 | 55.6 |
| Sample 2c | 0.55 | 55.9 |
| Sample 2d | 0.35 | 56.2 |
| Sample 2e | 0.45 | 55.6 |

As understood from Fig. 5, the noise value is about 56 dBA when the inter-corrugation gap is 1 mm or less, preferably 0.6 mm or less. On the other hand, when the inter-corrugation gap exceeds the threshold value, the noise value increases. Specifically, when the inter-corrugation gap is 1.5 mm, the noise value is 57.9 dBA.

The sound emitted from the second flexible hose 64 is caused by the gas flow occurring in the conduit 72 when the low pressure valve 40b is opened at the start of the exhaust process of the cryocooler 10 and the working gas expanded in the cold head 14 flows into the second flexible hose 64. Turbulence occurs by a part of the gas entering the inter-corrugation gap, which generates a sound. According to the analysis of the present inventor, it is considered that a sound pressure of the sound emitted from the conduit 72 does not increase linearly as the inter-corrugation gap increases, but is kept substantially constant when the inter-corrugation gap is equal to or less than a certain threshold value, and increases significantly when the inter-corrugation gap exceeds this threshold value. From the measurement result shown in Fig. 5, this threshold value can be read as, for example, 1 mm or preferably 0.6 mm.

Therefore, it is preferable that the conduit 72 of the second flexible hose 64 is configured such that the inter-corrugation gap on the corrugated inner surface 72a is, for example, 1 mm or less, or preferably 0.6 mm or less. In this way, the inter-corrugation gap on the corrugated inner surface 72a can be sufficiently narrowed, and the amount of the working gas that enters the gap can be reduced. In this manner, the generation of the turbulence in the second flexible hose 64 can be suppressed, and the noise generated from the second flexible hose 64 during the operation of the cryocooler 10 can be reduced.

From the viewpoint of reducing the noise value, the smaller inter-corrugation gap is preferable. Therefore, the inter-corrugation gap need only be larger than 0 mm. However, from the viewpoint of other factors such as manufacturability, it is considered reasonable in design that the inter-corrugation gap is 0.01 mm or more. Therefore, the conduit 72 may be configured such that the inter-corrugation gap on the corrugated inner surface 72a is larger than 0 mm or is preferably 0.01 mm or more.

During the operation of the cryocooler 10, mass flow rates of the working gas in the second flexible hose 64 and the first flexible hose 63 are equal to each other, and the pressure in the second flexible hose 64 is lower than the pressure in the first flexible hose 63. Therefore, in the exhaust process of the working gas through the second flexible hose 64, a volume flow rate is larger than in the intake process of the working gas through the first flexible hose 63. Therefore, a turbulent sound is more likely to be generated in the second flexible hose 64 than in the first flexible hose 63. Therefore, the inter-corrugation gap management proposed in the present specification is effective as a noise countermeasure in a line on the low pressure side of the working gas line 62, such as the second flexible hose 64.

However, the above-described inter-corrugation gap management may be similarly applied to the first flexible hose 63, and may be useful for reducing the turbulent sound that may occur in the first flexible hose 63. Furthermore, a flexible hose of the same design as the second flexible hose 64 is adopted for the first flexible hose 63, whereby it is possible to reduce product costs through standardization of parts.

In addition, since the inter-corrugation gap is a dimension related to an internal structure of the flexible hose, it is difficult to directly measure the inter-corrugation gap for a given flexible hose from an outside of the hose. Therefore, in order to specify the inter-corrugation gap of the flexible hose, the inter-corrugation gap may be measured by the following procedure.

(1) The flexible hose is disposed in a linear shape.

(2) The flexible hose is cut at three different locations in the axial direction. The cut surface is a plane including a hose center axis. The three cutting positions may be, for example, both ends and an intermediate portion of the hose.

(3) At each cutting position, an average value of ten inter-corrugation gaps continuously arranged in the hose axial direction is measured.

(4) An average of the average values of the inter-corrugation gaps acquired from the three cutting positions is taken. The average value thus acquired can be regarded as the inter-corrugation gap of the flexible hose.

The present invention has been described above based on the examples. It will be understood by those skilled in the art that the present invention is not limited to the above-described embodiment, various design changes are possible, various modification examples are possible, and such modification examples are also within the scope of the present invention. Various characteristics described in relation to one embodiment are also applicable to other embodiments. A new embodiment generated through combination also has the effects of each of the combined embodiments.

In the above-described embodiment, a case where the first flexible hose 63 and the second flexible hose 64 are each a single flexible hose has been described as an example, but the present invention is not limited to this. At least one of the first flexible hose 63 and the second flexible hose 64 may be formed by connecting a plurality of flexible hoses, and the braid stress management according to the embodiment may be applied to each of the flexible hoses or at least one of the flexible hoses.

In the above-described embodiment, a case where the cryocooler 10 is a two-stage GM cryocooler has been described as an example, but the present invention is not limited to this. The cryocooler 10 may be a single-stage or multi-stage GM cryocooler, and may be another type of cryocooler such as a pulse tube cryocooler or a Stirling cryocooler. The flexible hose for a cryocooler according to the embodiment can be used for such various cryocoolers.

Although the present invention has been described using specific words and phrases based on the embodiment, the embodiment merely shows one aspect of the principle and application of the present invention, and various modifications and improvements can be made within the scope of the present invention described in claims.

Brief Description of the Reference Symbols

10 cryocooler
12 compressor
14 cold head
22 intake port
24 exhaust port
50 delivery port
52 collection port
70 flexible hose
72 conduit
74 braid
76 braided wire

**Claims**

1.  A cryocooler (10) comprising:

    a compressor (12);
    a cold head (14); and
    a flexible hose (63, 64, 70) that connects the compressor (12) to the cold head (14) and that includes a conduit (72) through which a working gas of the cryocooler (10) flows and a braid (74) externally mounted on the conduit (72), wherein the braid (74) includes a braided wire (76) woven into a tubular shape to cover the conduit (72), and is configured such that a tensile stress that acts on the braided wire (76) when the working gas flows through the conduit (72) at a nominal pressure is 85 N/mm$^2$ or less.

2.  The cryocooler (10) according to claim 1,
    wherein the braid (74) is configured such that the tensile stress that acts on the braided wire (76) when the working gas flows through the conduit (72) at the nominal pressure is 30 N/mm$^2$ or more.

3. The cryocooler (10) according to claim 1,

   wherein the compressor (12) includes a delivery port (50) for delivering the working gas,
   the cold head (14) includes an intake port (22) for receiving the working gas, and
   the flexible hose (63, 64, 70) connects the delivery port (50) to the intake port (22).

4. The cryocooler (10) according to any one of claims 1 to 3,

   wherein the compressor (12) includes a collection port (52) for collecting the working gas,
   the cold head (14) includes an exhaust port (24) for exhausting the working gas,
   the cryocooler (10) further comprises another flexible hose (63, 64, 70) that connects the collection port (52) to the exhaust port (24) and that includes a conduit (72) through which the working gas flows, and
   the conduit (72) of the other flexible hose (63, 64, 70) includes a corrugated inner surface (72a) that is exposed to the flow (80) of the working gas, and an inter-corrugation gap on the corrugated inner surface (72a) is 1 mm or less.

5. The cryocooler (10) according to claim 4,
   wherein the inter-corrugation gap on the corrugated inner surface (72a) is 0.6 mm or less.

6. A cryocooler (10) comprising:

   a compressor (12);
   a cold head (14); and
   a flexible hose (63, 64, 70) that connects the compressor (12) to the cold head (14) and that includes a conduit (72) through which a working gas of the cryocooler (10) flows,
   wherein the conduit (72) includes a corrugated inner surface (72a) that is exposed to the flow (80) of the working gas, and an inter-corrugation gap on the corrugated inner surface (72a) is 1 mm or less.

7. A flexible hose (63, 64, 70) for a cryocooler (10), comprising:

   a conduit (72) through which a working gas of the cryocooler (10) flows; and
   a braid (74) externally mounted on the conduit (72),
   wherein the braid (74) includes a braided wire (76) woven into a tubular shape to cover the conduit (72), and is configured such that a tensile stress that acts on the braided wire (76) when the working gas flows through the conduit (72) at a nominal pressure is 85 N/mm$^2$ or less, and/or
   the conduit (72) includes a corrugated inner surface (72a) that is exposed to the flow (80) of the working gas, and an inter-corrugation gap on the corrugated inner surface (72a) is 1 mm or less.

# FIG. 1

10

# FIG. 2

10

## FIG. 3A

70

74

q

73 73

Dimax

$D_i$

$D_o$

72

76

d

b1

b3

b2

## FIG. 3B

b4

70

72 74

## FIG. 3C

70 72 74

72 74

72a 80

# FIG. 4

# FIG. 5

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 24 19 5514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/301957 A1 (XU MINGYAO [US] ET AL) 30 September 2021 (2021-09-30) * paragraph [0028] - paragraph [0035]; figures 1-7 * | 1-5 | INV. F25B9/00 F25B41/40 |
| X | CN 1 926 374 A (SIEMENS MAGNET TECHNOLOGY LTD [GB]) 7 March 2007 (2007-03-07) * figures 1-4 * | 1-5 | |
| X | DE 196 48 253 C2 (SIEMENS AG [DE]) 4 April 2002 (2002-04-04) * figure 1 * | 1-5 | |
| A | WO 2017/069285 A1 (SUMITOMO HEAVY INDUSTRIES [JP]) 27 April 2017 (2017-04-27) * figure 7 * | 1 | |

**TECHNICAL FIELDS
SEARCHED (IPC)**

F25B

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 4 April 2025 | Gasper, Ralf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................
& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Claim(s) completely searchable:
      1-5

Claim(s) not searched:
      6, 7

Reason for the limitation of the search:

The search has been restricted to the subject-matter indicated by the
applicant in his letter of 10.03.2025 filed in reply to the invitation
pursuant to Rule 62a(1) EPC. Thus, the present opinion has been drawn up
on the basis of independent apparatus claim 1 and its dependent claims.
The non-searched subject-matter should be excised from the application
and may be made the subject of one or more divisional applications
according to  Rule 137 (5) EPC.

## ANNEX TO THE EUROPEAN SEARCH REPORT
## ON EUROPEAN PATENT APPLICATION NO.

EP 24 19 5514

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | | | Publication date | Patent family member(s) | | | Publication date |
|---|---|---|---|---|---|---|---|
| US 2021301957 | A1 | | 30-09-2021 | CN | 115176117 | A | 11-10-2022 |
| | | | | EP | 4127575 | A1 | 08-02-2023 |
| | | | | JP | 7481482 | B2 | 10-05-2024 |
| | | | | JP | 2023520880 | A | 22-05-2023 |
| | | | | US | 2021301957 | A1 | 30-09-2021 |
| | | | | WO | 2021202238 | A1 | 07-10-2021 |
| CN 1926374 | A | | 07-03-2007 | CN | 1926374 | A | 07-03-2007 |
| | | | | GB | 2411711 | A | 07-09-2005 |
| | | | | US | 2008134692 | A1 | 12-06-2008 |
| | | | | WO | 2005085702 | A1 | 15-09-2005 |
| DE 19648253 | C2 | | 04-04-2002 | DE | 19648253 | A1 | 04-06-1998 |
| | | | | JP | 4138922 | B2 | 27-08-2008 |
| | | | | JP | H10155771 | A | 16-06-1998 |
| | | | | US | 5913888 | A | 22-06-1999 |
| WO 2017069285 | A1 | | 27-04-2017 | CN | 108351125 | A | 31-07-2018 |
| | | | | JP | 6611124 | B2 | 27-11-2019 |
| | | | | JP | 2017083028 | A | 18-05-2017 |
| | | | | US | 2018231164 | A1 | 16-08-2018 |
| | | | | WO | 2017069285 | A1 | 27-04-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002333224 A